# EUROPEAN PATENT SPECIFICATION

(11) **EP 3 565 997 B1**
(45) Date of publication and mention of the grant of the patent: **07.06.2023**
(21) Application number: 18700263.9
(22) Date of filing: 02.01.2018
(51) Int. Cl.: F16L 37/133, B60T 17/04, F16L 37/098, F16L 37/107, F16L 37/113

(54) **VEHICLE BREAKING VALVE WITH A TUBE SECURED TO A PORT**
FAHRZEUGBREMSVENTIL MIT EINEM AN EINER ANSCHLUSSSTELLE BEFESTIGTEN ROHR
VANNE DE FREINAGE DE VÉHICULE AVEC UN TUBE FIXÉ À UN ACCÈS

(30) Priority: 06.01.2017 GB 201700230
(43) Date of publication of application: 13.11.2019
(73) Proprietor: Haldex Brake Products AB, 26124 Landskrona (SE)
(72) Inventor: MELLINGS, Carl, Worcester WR7 4DF (GB)
(74) Representative: Forresters IP LLP
(86) International application number: PCT/EP2018/050078
(87) International publication number: WO 2018/127495

(56) References cited:
- EP-A1- 0 328 494
- WO-A1-2008/099841
- WO-A1-2013/156542
- US-A- 5 540 463
- US-A1- 2005 167 980
- US-A1- 2016 273 685

## Description

The present invention relates to an apparatus for securing a tube to a port of a valve such as a pneumatic braking valve. The tube may be a flexible hose, pipeline or other conduit, through which fluid such as compressed air is supplied to or flows from the port.

In pneumatic braking systems, such as those used in heavy goods vehicles, the conduits (hoses or pipelines) which convey compressed air around the braking system (for example, from the compressed air reservoir or to the brake actuators) are connected to ports in fluid control valves by means of push to connect fittings such as those made by Kongsberg Automotive and sold under the trade mark Raufoss Couplings^{®}. These fittings can be very difficult to remove for service in field if damaged, and often an internal feature on the fitting damages the main valve housing when the fitting is removed.

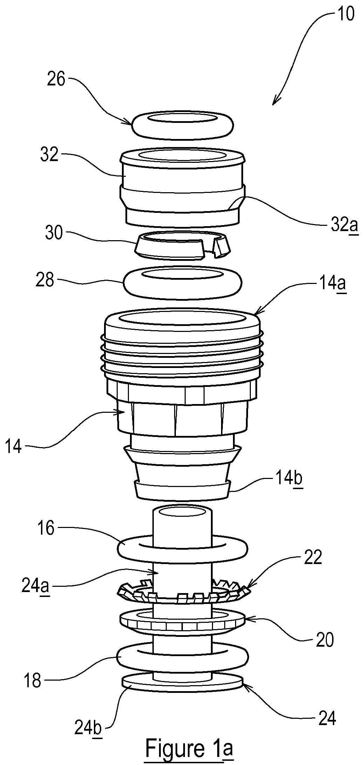

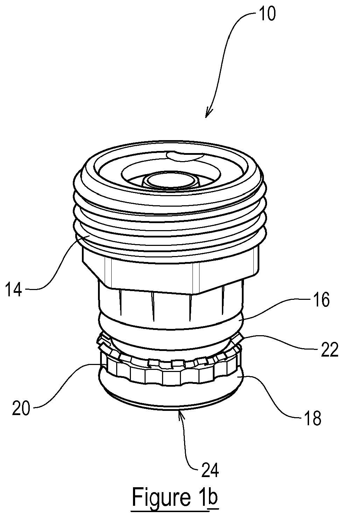

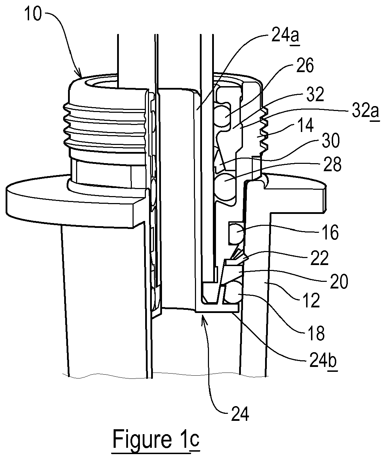

An example of a prior art Raufoss Couplings^{®} fitting 10 is illustrated in Figures 1a, 1b and 1c. An exploded view of the fitting 10 is illustrated in Figure 1a, whilst Figure 1b shows the fitting in its assembled state, and Figure 1c shows the fitting inserted in port 12 of a valve housing, and connecting a tube 13 to the port 12.

The prior art fitting 10 comprises a main cartridge body 14, having a first end 14a and a second end 14b, around which, towards the second end 14b, are mounted two exterior O-ring seals 16, 18 which, when the fitting is inserted into the port 12 provide a substantially fluid tight seal between the fitting 10 and the housing around the port 12. In between the two exterior O-ring seals 16, 18, there is a locking ring 20 and star washer 22, and a locking element 24 is provided at the second end 14b of the main cartridge body 14 adjacent to the second one of the exterior O-ring seals 18.

The main cartridge body 14 is tubular, and, as such, has a longitudinally extending main passage which extends from the first end 14b to the second end 14b thereof. Two interior O-ring seals 26, 28 are mounted in the main passage adjacent the first end 14a of the main cartridge body 14, spaced by a grip ring 30 and cone element 32. The interior O-ring seals 26,28 are adapted to engage with the exterior surface of a tube 13 inserted into the fitting 10 so as to provide a substantially fluid tight seal between the fitting 10 and the tube 13.

The locking element 24 has a tubular portion 24a with a radially extending annular flange portion 24b which is located at an end of the tubular portion 24a. The tubular portion 24a has a generally circular transverse cross-section, and extends along the main passage of the main cartridge body 14 to the second end 14b thereof, the tube 13 being located in the annular space around the exterior of the tubular portion 24a. The tubular portion 24a thus acts to locate the tube 13 in sealing engagement with the interior O-ring seals 26, 28.

The first exterior O-ring seal 16 is located in a circumferential groove provided in the radially outward surface of the main cartridge body 14, whilst the second exterior O-ring seal 18 is trapped between the flange portion 24b of the locking element 24 and the locking ring 20.

The cone element 32 is also tubular and, when the fitting 10 is assembled, the first interior O-ring seal 26 is retained in a groove provided in the interior face of the cone element 32. The second interior O-ring seal 28 is captured between the grip ring 30 and a shoulder provided in the interior surface of the main cartridge body 14. The cone element 32 has a radially outwardly extending circumferential ridge 32a which is located in a corresponding circumferential groove in the interior surface of the main cartridge body 14, so as to retain the cone element 32, interior O-ring seals 26, 28 and grip ring 30 in place in the main cartridge body 14.

The star washer 22 is located around the main cartridge body 14 between a shoulder in the exterior surface of the main cartridge body 14 and the locking ring 20. It is annular and has a plurality of radially outwardly extending protuberance which are inclined towards the first end 14a. This ensures that the fitting 10 can be readily pushed, locking element 24 first, into the port 12 of a valve housing, as illustrated in Figure 1c. The protuberances engage with the housing around the port 12, and as a result of this and their angle of inclination, ensure that the fitting 10 is retained in the port 12. Whilst it might be possible to remove the fitting 10 from the port 12, to do so requires significant force as the protuberances dig into the housing around the port 12 and have to be dragged along the housing around the port 12 as the fitting 10 is pulled out. This can cause significant damage to the housing, and the housing can be gouged to such an extent that exterior O-rings 16, 18 of a new fitting inserted into the port 12 cannot provide a substantially fluid tight seal.

WO2008/099841 discloses a pipe fitting having a first fitting member and a second fitting member formed as a separate body from the first fitting member. US5540463 discloses a coupling for connecting hoses or other conduits carrying refrigerant material in an air conditioning system and has a male end and a female end. US2016/273685 discloses a hydraulic fluid line coupling system. WO2013/156542 discloses a threadless pipe coupling. EP0328494 discloses a coupling device for releasably connecting a suction hose to a vacuum cleaner housing.

It is an object of the present invention to provide an improved design of push to connect fitting.

According to the invention we provide a vehicle braking valve including a valve housing enclosing a port and having an exterior surface and an interior surface, and having a fluid delivery assembly comprising a fitting and a tube, the fitting providing a fluid tight seal between the tube and the valve housing, the fitting comprising a tubular main body having a first end and a second end which is located in the port of the valve housing, a first seal arrangement providing a substantially fluid tight seal between the tube and the fitting, a second sealing arrangement providing a substantially fluid tight seal between the interior surface of the valve housing and the fitting, and a retaining part securing the fitting to the valve housing, wherein the retaining part has first end face which engages with the first end of the main body so as to prevent the main body from being removed from the port, and a retaining formation which engages with a retaining formation provided on the exterior surface of the valve housing so as to releasably secure the retaining part to the valve housing characterised in that the retaining formation is provided on an arm which extends from the first end face generally perpendicular thereto, the retaining formation comprises a lip formation which extends from a free end of the arm into a corresponding recess or aperture provided in the tubular valve housing and wherein the retaining part is configured such that its retaining formation can be released from engagement with the retaining formation of the valve housing by rotational movement of the retaining part relative to the valve housing.

By virtue of ensuring that the second sealing arrangement engages with a different face to the face in which the retaining formation is provided, the fitting may be removed from the port without causing damage to the valve housing that would prevent a substantially fluid tight seal being achieved between the valve housing and a new fitting.

The valve housing may be tubular having a wall which surrounds a central passage, which forms the port. In this case, the exterior surface and interior surface of the housing may be the exterior and interior surfaces of the wall respectively.

The retaining part may be provided with two retaining formations each being provided on an arm which extends from the first end face generally perpendicular thereto. In this case, advantageously, the arms are located at diametrically opposite positions on the first end face.

The or each arm may lie along the exterior surface of the tubular housing.

The retaining part may be sufficiently flexible that a user can manually move the retaining formation out of engagement with the housing in order to remove the fitting from the port. In this case, the retaining part is sufficiently resilient that it will return to its original configuration after such manual movement.

The retaining part may be made from a polymeric material.

The retaining part may be a different colour to the main body. In this case, the colour of the retaining part may be used to identify the nature of the port to which the fitting connects.

Embodiments of the invention will now be described with reference to the accompanying drawings of which:
FIGURE 2 shows a perspective illustration of a fitting and housing suitable for use in a fluid delivery assembly according to the first aspect of the invention,
FIGURE 3 shows a longitudinal cross-section through the fitting and housing illustrated in Figure 2,
FIGURE 4 shows a longitudinal cross-section through the fitting and housing illustrated in Figure 2 with a tube inserted in the fitting to form a fluid delivery assembly according to the first aspect of the invention.

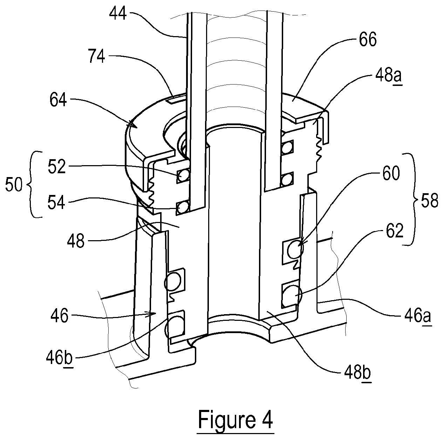

Referring now to Figure 4, there is shown a fluid delivery assembly 40 comprising a fitting 42, a tube 44 and a housing 46 enclosing a port and having an exterior surface 46a and an interior surface 46b, the fitting 42 providing a fluid tight seal between the tube 44 and the housing 46. In this case, the housing 46 has a tubular portion, having a wall which surrounds a central passage, the central passage forming the port. The exterior surface 46a and interior 46b surface of the housing 46 are the exterior and interior surfaces of the wall respectively.

The housing is the housing of a brake valve for use in a vehicle braking system.

The fitting 42 comprises a tubular main body 48 having a first end 48a and a second end 48b which is located in the port. A main passage 48c extends along the main body 48 of the fitting 42 from its first end 48a to its second 48b. In this example, the main body 48 has a generally circular transverse cross-section.

The fitting 42 further comprises a first sealing arrangement 50 which provides a substantially fluid tight seal between the tube 44 and the fitting 42. In this example, the first sealing arrangement 50 comprises first and second interior O-ring seals 52, 54, which are each located in a separate circumferential groove around a radially inwardly facing surface adjacent the first end 48a of the main body 48. The interior O-ring seals 52, 54 engage with an exterior surface of the tube 44, which is urged against the seals 52, 54 by a locating tube 56 which extends along the main passage towards the first end 48b of the main body 48 and spaced from the radially inwardly facing surface of the main body 48. An end of the tube 44 is located in the generally annular space between the locating tube 56 and the radially inwardly facing surface of the main body, and is urged into sealing engagement with the interior O-ring seals 52, 54 by the locating tube 56.

The fitting 42 is also provided with a second sealing arrangement 58 providing a substantially fluid tight seal between the tubular housing 46 and the fitting 42. In this example, the second sealing arrangement 58 comprises first and second exterior O-ring seals 60, 62, which are each located in a separate circumferential groove provided around a radially outwardly facing surface of the main body 48 of the fitting 42 adjacent the second end 48b of the main body 48. The exterior O-ring seals 60, 62 engage with the interior surface 46b of the tubular housing 46 to provide a substantially fluid tight seal.

The fitting 42 further includes a retaining part 64 by means of which the fitting 42 is secured to the housing 46. The retaining part 64 has an annular first end face 66 which engages with the first end 48a of the main body 48 so as to prevent the main body 48 from being removed from the port, and a retaining formation 68 which engages with a retaining formation 70 provided on the exterior surface 46a of the tubular housing 46 so as to releasably secure the retaining part 64 to the housing 46. The retaining part 64 is preferably secured to the housing 46 using a snap-fit connection.

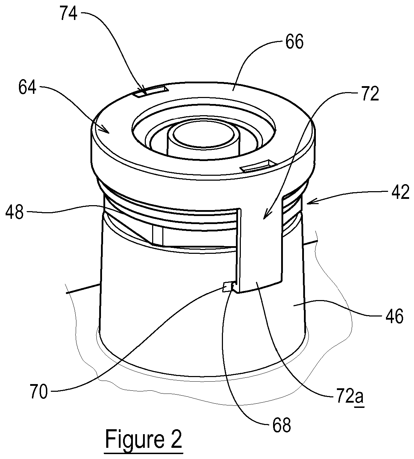

In this example, the retaining part 64 is provided with two retaining formations 68, each being provided on an arm 72 which extends from the first end face 66 generally perpendicular thereto. This is best illustrated in Figure 2. In this case, the arms 72 are located at diametrically opposite positions on the first end face 66, and extend from the radially outward edge thereof.

Each retaining formation 68 comprises a lip formation which extends from a free end 72a of the arm 72 into a corresponding recess or aperture 70 provided in the tubular housing 46. Each arm lies along the exterior surface 46a of the tubular housing 46, the lip formation extending into a corresponding recess or aperture 70 provided in the exterior surface of the tubular housing.

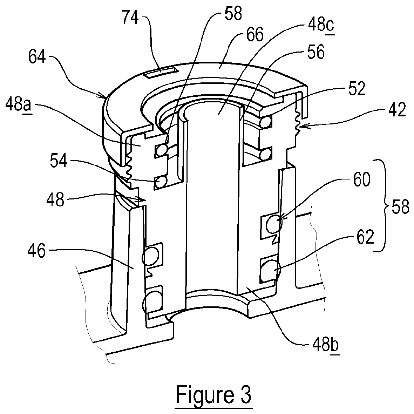

As can be seen in Figures 3 and 4, the first end 48a of the main body 48 of the fitting 42 is sandwiched between the first end face 66 of the retaining part 64 and the tubular housing 46. The mechanical engagement of each lip formation with the housing 46 resulting from the location of the lip formations in the recess / aperture 70 provided in the exterior surface 46a of the housing 46, holds the retaining part 64 in position. The retaining part 64 thus prevents the main body 48 of the fitting from being removed from the port.

The retaining part 64 is sufficiently flexible that a user can manually move the retaining formation 68 out of engagement with the housing 46 in order to remove the retaining part 64, and slide the main body 48 of the fitting 42 from the port. For example, a user may use a tool such as a screwdriver to bend the arms 72 outwardly, so as to pull the lip formation out of the recess/aperture 70 in the housing. In this example two apertures 74 are provided in the end face 66 of the retaining part 64 one adjacent to each arm 72. A user can inserted an elongate tool into one of the apertures 74 and use the tool to bend the arm 72 away from the housing 64 to release the retaining part 64.

In this case, the retaining part 64 is sufficiently resilient that it will return to its original configuration after such manual movement. This means that the retaining part 64 can be used again to secure a new fitting to the housing 46.

The retaining part may be made from a polymeric material.

By virtue of ensuring that the second sealing arrangement 58 engages with a different face of the housing 46 to the face in which the retaining formation 70 is provided, the fitting 42 may be removed from the port without causing damage to the housing 46 that would prevent a substantially fluid tight seal being achieved between the housing 46 and a new fitting.

The retaining part 64 may be a different colour to the main body 48 of the fitting 42. In this case, the colour of the retaining part 64 may be used to identify the nature of the port to which the fitting connects. For example, retaining parts having a first colour may be used in relation to all the inlets on a valve housing, whilst retaining parts having a second colour may be used in relation to all the outlets. It will be appreciated that this means that a standard fitting main body 48 and associated parts 50, 56, 58 may be provided for use in all valve ports, whilst a selection of different coloured retaining parts 64 are provided so that a user can select an appropriate colour retaining part 64 for use with a fitting 42 in a particular kind of port.

It will be appreciated that the exact configuration of the fitting may be varied whilst still being within the scope of this invention. For example, the fitting could be configured in the same way as the prior art fitting 10 illustrated in Figures 1a, 1b and 1c, but star washer 22 being omitted and replaced with a retaining part as illustrated in Figures 2, 3 and 4. Equally, whilst in this example, the second sealing arrangement provides a substantially fluid tight seal with the interior surface 46b of the housing 46, whilst the retaining formation engages with the exterior surface 46a, this may be reversed. In other words, the second sealing arrangement may provide a substantially fluid tight seal between the exterior surface 46a of the housing 46 whilst the retaining formation engages with the interior surface 46b.

The retaining part is configured such that its retaining formation can be released from engagement with the retaining formation of the housing by rotational movement of the retaining part relative to the housing, for example using a bayonet type configuration.

When used in this specification and claims, the terms "comprises" and "comprising" and variations thereof mean that the specified features, steps or integers are included. The terms are not to be interpreted to exclude the presence of other features, steps or components.

## Claims

1. A vehicle braking valve including a valve housing (46) enclosing a port and having an exterior surface (46a) and an interior surface (46b), and having a fluid delivery assembly (40) comprising a fitting (42) and a tube (44), the fitting (42) providing a fluid tight seal between the tube (44) and the valve housing (46), the fitting (42) comprising a tubular main body (48) having a first end (48a) and a second end (48b) which is located in the port of the valve housing (46), a first seal arrangement providing a substantially fluid tight seal between the tube (44) and the fitting (42), a second sealing arrangement providing a substantially fluid tight seal between the interior surface (46b) of the valve housing (46) and the fitting (42), and a retaining part securing the fitting to the valve housing, wherein the retaining part (64) has first end face (66) which engages with the first end (48a) of the main body (48) so as to prevent the main body (48) from being removed from the port, and a retaining formation (68) which engages with a retaining formation (70) provided on the exterior surface (46a) of the valve housing (46) so as to releasably secure the retaining part (64) to the valve housing (46) **characterised in that** the retaining formation (68) is provided on an arm (72) which extends from the first end face (66) generally perpendicular thereto, the retaining formation (68) comprises a lip formation which extends from a free end (72a) of the arm (72) into a corresponding recess or aperture (70) provided in the tubular valve housing (46) and wherein the retaining part (64) is configured such that its retaining formation (68) can be released from engagement with the retaining formation (70) of the valve housing (46) by rotational movement of the retaining part (64) relative to the valve housing (46).

2. A vehicle braking valve according to claim 1 wherein the valve housing (46) is tubular and has a wall which surrounds a central passage, the central passage forming the port.

3. A vehicle braking valve according to claim 2 wherein the exterior surface (46b) and interior surface (46a) of the valve housing (46) are the exterior and interior surfaces of the wall respectively.

4. A vehicle braking valve according to any preceding claim wherein the retaining part (64) is provided with two retaining formations (68) each being provided on an arm (72) which extends from the first end face (66) generally perpendicular thereto.

5. A vehicle braking valve according to claim 4 wherein the arms (72) are located at diametrically opposite positions on the first end face (66).

6. A vehicle braking valve according to any one of the preceding claims wherein the or each arm (72) lies along the exterior surface (46a) of the tubular valve housing (46).

7. A vehicle braking valve according to any preceding claim wherein the retaining part (64) is sufficiently flexible that a user can manually move the retaining formation (68) out of engagement with the valve housing (46) in order to remove the fitting (42) from the port.

8. A vehicle braking valve according to claim 7 wherein the retaining part (64) is sufficiently resilient that it will return to its original configuration after such manual movement.

9. A vehicle braking valve according to any preceding claim wherein the retaining part (64) is made from a polymeric material.

10. A vehicle braking valve according to any preceding claim wherein the retaining part (64) is a different colour to the main body (48).

## Patentansprüche

1. Fahrzeugbremsventil, ein Ventilgehäuse (46) beinhaltend, das einen Anschluss umschließt und eine Außenfläche (46a) und eine Innenfläche (46b) aufweist, und eine Fluidzufuhranordnung (40) aufweisend, die einen Fitting (42) und ein Rohr (44) umfasst, wobei der Fitting (42) ein fluiddichte Abdichtung zwischen dem Rohr (44) und dem Ventilgehäuse (46) bereitstellt, wobei der Fitting (42) einen röhrenförmigen Hauptteil (48) mit einem ersten Ende (48a) und einem zweiten Ende (48b), das sich in dem Anschluss des Ventilgehäuses (46) befindet, umfasst, eine erste Dichtungsanordnung, die eine im Wesentlichen fluiddichte Dichtung zwischen dem Rohr (44) und dem Fitting (42) bereitstellt, eine zweite Dichtungsanordnung, die eine im Wesentlichen fluiddichte Dichtung zwischen der Innenfläche (46b) des Ventilgehäuses (46) und dem Fitting (42) bereitstellt, und einen Halteteil, der den Fitting an dem Ventilgehäuse sichert, wobei der Halteteil (64) eine erste Endfläche (66) aufweist, die mit dem ersten Ende (48a) des Hauptteils (48) in Eingriff steht, so dass verhindert wird, dass der Hauptteil (48) von dem Anschluss entfernt wird, und eine Halteformation (68), die mit einer Halteformation (70) in Eingriff steht, die an der Außenfläche (46a) des Ventilgehäuses (46) bereitgestellt ist, so dass der Halteteil (64) lösbar an dem Ventilgehäuse (46) gesichert ist, **dadurch gekennzeichnet, dass** die Halteformation (68) an einem Arm (72) bereitgestellt ist, der sich von der ersten Endfläche (66) im Allgemeinen senkrecht zu dieser erstreckt, wobei die Halteformation (68) eine Lippenformation umfasst, die sich von einem freien Ende (72a) des Arms (72) in eine entsprechende Vertiefung oder Öffnung (70) erstreckt, die in dem röhrenförmigen Ventilgehäuse (46) bereitgestellt ist, und wobei der Halteteil (64) derart gestaltet ist, dass seine Halteformation (68) durch Drehbewegung des Halteteils (64) relativ zu dem Ventilgehäuse (46) aus dem Eingriff mit der Halteformation (70) des Ventilgehäuses (46) gelöst werden kann.

2. Fahrzeugbremsventil nach Anspruch 1, wobei das Ventilgehäuse (46) röhrenförmig ist und eine Wand aufweist, die einen mittigen Durchlass umgibt, wobei der mittige Durchlass den Anschluss bildet.

3. Fahrzeugbremsventil nach Anspruch 2, wobei die Außenfläche (46b) und die Innenfläche (46a) des Ventilgehäuses (46) die Außen- beziehungsweise die Innenfläche der Wand sind.

4. Fahrzeugbremsventil nach einem der vorhergehenden Ansprüche, wobei der Halteteil (64) mit zwei Halteformationen (68) versehen ist, die jeweils an einem Arm (72) bereitgestellt sind, der sich von der ersten Endfläche (66) im Allgemeinen senkrecht zu dieser erstreckt.

5. Fahrzeugbremsventil nach Anspruch 4, wobei sich die Arme (72) an diametral gegenüberliegenden Positionen an der ersten Endfläche (66) befinden.

6. Fahrzeugbremsventil nach einem der vorhergehenden Ansprüche, wobei der oder jeder Arm (72) entlang der Außenfläche (46a) des röhrenförmigen Ventilgehäuses (46) liegt.

7. Fahrzeugbremsventil nach einem der vorhergehenden Ansprüche, wobei der Halteteil (64) ausreichend flexibel ist, so dass ein Anwender die Halteformation (68) manuell aus dem Eingriff mit dem Ventilgehäuses (46) bewegen kann, um den Fitting (42) von dem Anschluss zu entfernen.

8. Fahrzeugbremsventil nach Anspruch 7, wobei der Halteteil (64) ausreichend flexibel ist, so dass er nach einer derartigen manuellen Bewegung zu seiner ursprünglichen Gestalt zurückkehrt.

9. Fahrzeugbremsventil nach einem der vorhergehenden Ansprüche, wobei der Halteteil (64) aus einem Polymermaterial besteht.

10. Fahrzeugbremsventil nach einem der vorhergehenden Ansprüche, wobei der Halteteil (64) von einer anderen Farbe als der Hauptteil (48) ist.

## Revendications

1. Soupape de freinage de véhicule doté d'un boîtier de soupape (46) logeant un port et comportant une surface extérieure (46a) et une surface intérieure (46b), et comportant un ensemble de distribution de fluide (40) comprenant un raccord (42) et un tube (44), le raccord (42) formant un joint étanche entre le tube (44) et le boîtier de soupape (46), le raccord (42) comprenant un corps principal tubulaire (48) comportant une première extrémité (48a) et une seconde extrémité (48b) qui est située dans le port du boîtier de soupape (46), une première garniture d'étanchéité formant un joint sensiblement étanche entre le tube (44) et le raccord (42), une seconde garniture d'étanchéité formant un joint sensiblement étanche entre la surface intérieure (46b) du boîtier de soupape (46) et le raccord (42), et une partie de retenue assujettissant le raccord au boîtier de soupape, dans lequel la partie de retenue (64) comporte une partie frontale de la première extrémité (66) qui s'engage dans la première extrémité (48a) du corps principal (48), pour éviter que le corps principal (48) ne sorte du port, et une structure de retenue (68) qui s'engage dans une structure de retenue (70) prévue sur la surface extérieure (46a) du boîtier de soupape (46) de sorte à assujettir de manière amovible la partie de retenue (64) au boîtier de soupape (46), **caractérisé en ce que** la structure de retenue (68) est située sur un bras (72) qui part de la partie frontale de la première extrémité (66) généralement perpendiculaire à celle-ci, la structure de retenue (68) comprend une structure de lèvre qui part d'une extrémité libre (72a) du bras (72) jusque dans un renforcement ou une ouverture (70) correspondant(e) situé(e) dans le boîtier de soupape tubulaire (46) et dans lequel la partie de retenue (64) est configurée pour que sa structure de retenue (68) puisse se dégager de la structure de retenue (70) du boîtier de soupape (46) par un mouvement rotatif de la partie de retenue (64) par rapport au boîtier de soupape (46).

2. Soupape de freinage de véhicule selon la revendication 1, dans lequel le boîtier de soupape (46) est tubulaire et comporte une paroi qui entoure un passage central, le passage central formant le port.

3. Soupape de freinage de véhicule selon la revendication 2, dans lequel la surface extérieure (46b) et la surface intérieure (46a) du boîtier de soupape (46) sont les surfaces extérieure et intérieure de la paroi respectivement.

4. Soupape de freinage de véhicule selon l'une quelconque des revendications précédentes, dans lequel la partie de retenue (64) est dotée de deux structures de retenue (68), chacune étant située sur un bras (72) qui part de la partie frontale de la première extrémité (66) généralement perpendiculaire à celle-ci.

5. Soupape de freinage de véhicule selon la revendication 4, dans lequel les bras (72) sont situés à des positions diamétralement opposées sur la partie frontale de la première extrémité (66).

6. Soupape de freinage de véhicule selon l'une quelconque des revendications précédentes, dans lequel l'arbre ou chaque arbre (72) s'étend le long de la surface extérieure (46a) du boîtier de soupape tubulaire (46).

7. Soupape de freinage de véhicule selon l'une quelconque des revendications précédentes, dans lequel la partie de retenue (64) est suffisamment souple pour permettre à un utilisateur de manuellement dégager la structure de retenue (68) du boîtier de soupape (46) et ainsi d'enlever le raccord (42) du port.

8. Soupape de freinage de véhicule selon la revendication 7, dans lequel la partie de retenue (64) est suffisamment résiliente pour pouvoir reprendre sa configuration d'origine suite à un tel déplacement.

9. Soupape de freinage de véhicule selon l'une quelconque des revendications précédentes, dans lequel la partie de retenue (64) est fabriquée à partir de matériau polymère.

10. Soupape de freinage de véhicule selon l'une quelconque des revendications précédentes, dans lequel la couleur de la partie de retenue (64) est différente de celle du corps principal (48).
